(19) Europäisches Patentamt
European Patent Office
Office européen des brevets

(11) **EP 4 163 596 B1**

(12) **EUROPÄISCHE PATENTSCHRIFT**

(45) Veröffentlichungstag und Bekanntmachung des Hinweises auf die Patenterteilung:
**07.05.2025 Patentblatt 2025/19**

(21) Anmeldenummer: **22196613.8**

(22) Anmeldetag: **20.09.2022**

(51) Internationale Patentklassifikation (IPC):
*G01P 3/481* (2006.01)   *G01P 21/02* (2006.01)
*B60W 40/10* (2012.01)   *B60W 40/105* (2012.01)
*B60W 40/107* (2012.01)   *B60W 50/00* (2006.01)
*G01C 21/16* (2006.01)   *G01C 22/00* (2006.01)
*B62J 45/41* (2020.01)   *B62M 6/50* (2010.01)

(52) Gemeinsame Patentklassifikation (CPC):
**B62J 45/41; B60W 40/10; B60W 40/105;
B60W 40/107; B60W 50/0098; B62M 6/50;
G01C 21/165; G01C 22/002; G01P 21/02;**
B60W 2050/0052; B60W 2300/36; B60W 2520/16;
B60W 2520/18; B60W 2520/28

(54) **VERFAHREN ZUM ERMITTELN VON BEWEGUNGSGRÖSSEN EINES ZWEIRADS**

METHOD FOR DETERMINING QUANTITIES OF MOTION OF A TWO-WHEELED VEHICLE

PROCÉDÉ DE DÉTERMINATION DE GRANDEURS DE MOUVEMENT D'UN DEUX-ROUES

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **08.10.2021 DE 102021211388**

(43) Veröffentlichungstag der Anmeldung:
**12.04.2023 Patentblatt 2023/15**

(73) Patentinhaber: **Robert Bosch GmbH
70442 Stuttgart (DE)**

(72) Erfinder:
• **Klug, Silas
71106 Magstadt (DE)**
• **Moia, Alessandro
71088 Holzgerlingen (DE)**
• **Reck, Joseph
70794 Filderstadt (DE)**
• **Baumgaertner, Daniel
72072 Tuebingen (DE)**

(56) Entgegenhaltungen:
US-A1- 2012 259 526    US-A1- 2012 323 485
US-A1- 2017 285 065

EP 4 163 596 B1

**Beschreibung**

Stand der Technik

Die vorliegende Erfindung betrifft ein Verfahren zum Ermitteln von Bewegungsgrößen eines Zweirads, sowie ein Zweirad.

Bekannt sind Sensorsysteme für Zweiräder, mittels welchen Bewegungsgrößen, wie Geschwindigkeit, zurückgelegte Strecken, Beschleunigungen und Drehraten von Zweirädern erfasst werden können. Die Geschwindigkeit stellt dabei eine wichtige Bewegungsgröße dar, welche beispielsweise auch für weitere Systeme verwendet wird. Beispielsweise ist im Einsatz in einem Elektrofahrrad häufig eine Regelung einer Antriebseinheit des Elektrofahrrads in Abhängigkeit der Geschwindigkeit vorgesehen. Insbesondere bei Fahrrädern erfolgt eine Erfassung der Geschwindigkeit dabei häufig mittels sogenannter Reed-Sensoren. Dabei ist üblicherweise ein Magnet an einem Rad des Fahrrads befestigt. Mittels eines an einem Rahmen des Fahrrads befestigten Magnetsensors wird pro Umdrehung des Rads ein Puls erfasst, um basierend auf einer Frequenz der Pulse und dem Radumfang die Geschwindigkeit des Fahrrads zu ermitteln. Aus Gründen von Kosten, Einfachheit und Gewicht wird dabei häufig nur ein einpulsiger Sensor mit einem einzelnen Magneten am Rad verwendet. Dadurch ist jedoch insbesondere bei niedrigen Geschwindigkeiten häufig eine hohe Ungenauigkeit vorhanden. Bekannt ist auch, die Genauigkeit durch mehrpulsige Sensoren zu erhöhen, wodurch jedoch die Komplexität, Kosten und Gewicht steigen.

In US 2012/259526 A1, US 2017/285065 A1 und US 2012/323485 sind bekannte Systeme und Verfahren zum Ermitteln von Bewegungsgrößen von Fahrzeugen offenbart.

Offenbarung der Erfindung

Das erfindungsgemäße Verfahren mit den Merkmalen des Anspruchs 1 zeichnet sich demgegenüber durch eine besonders einfache und kostengünstige Methode aus, mit welcher Bewegungsgrößen eines Zweirads sehr präzise ermittelt werden können. Insbesondere kann dabei auch bei sehr niedrigen Geschwindigkeiten eine hohe Genauigkeit erreicht werden. Dies wird erfindungsgemäß erreicht durch ein Verfahren zum Ermitteln von Bewegungsgrößen eines Zweirads, wobei das Zweirad ein Sensorsystem umfasst, welches einen Drehratensensor, einen Beschleunigungssensor, und einem Raddrehzahlsensor aufweist. Der Raddrehzahlsensor ist dabei insbesondere ein Umdrehungssensor, und ausgebildet, um pro Umdrehung eines Rads des Zweirads mindestens einen Messpuls zu detektieren. Vorzugsweise ist der Raddrehzahlsensor ein einpulsiger Reed-Sensor, welcher genau einen Magneten, der am Rad befestigt ist und mit dem Rad rotiert, aufweist, und insbesondere einen Empfänger, der bei einem Passieren des Magneten genau einen Messpuls detektiert. Das Verfahren umfasst dabei die folgenden Schritte:

- Erfassen von, insbesondere dreidimensionalen, Drehraten des Zweirads des Drehratensensors,
- Erfassen von Beschleunigungswerten des Zweirads mittels des Beschleunigungssensors,
- Abschätzen eines Bewegungszustands des Zweirads basierend auf den erfassten Drehraten, wobei der Bewegungszustand Schätzwerte für geschätzte Beschleunigungswerte und für eine geschätzte Geschwindigkeit und für eine geschätzte zurückgelegte Strecke umfasst,
- erstes Korrigieren des geschätzten Bewegungszustands basierend auf den erfassten Beschleunigungswerten, und
- Ermitteln einer mit dem Zweirad zurückgelegten Strecke, oder einer momentanen Geschwindigkeit des Zweirads und einer mit dem Zweirad zurückgelegten Strecke basierend auf dem korrigierten geschätzten Bewegungszustand.

Als Schätzwerte werden insbesondere ermittelte bzw. berechnete Werte der jeweiligen Kenngrößen, also der geschätzten Beschleunigungswerte, der geschätzten Geschwindigkeit, und der geschätzten zurückgelegten Strecke, angesehen. Mit anderen Worten wird als Schätzwert insbesondere ein Zahlenwert, vorzugsweise inklusive der entsprechenden Maßeinheit, angesehen. Insbesondere umfasst der Bewegungszustand pro derartiger Kenngröße jeweils einen separaten Schätzwert. Insbesondere werden die Schätzwerte durch das Verfahren iterativ optimiert, um basierend darauf die gewünschten Kenngrößen ermitteln zu können.

Bevorzugt werden mittels des Drehratensensors dreidimensionale Drehraten erfasst, welche jeweils eine Drehrate um eine Längsachse, welche insbesondere in Fahrtrichtung ausgerichtet ist, um eine vertikale Hochachse, und um eine Nickachse, welche senkrecht zur Längsachse und Hochachse ist, umfassen.

Mit anderen Worten werden bei dem Verfahren mittels des Drehratensensors die, insbesondere dreidimensionalen, Drehraten erfasst und basierend auf diesen ein allgemeiner Bewegungszustand des Zweirads, welcher auch weitere Bewegungsgrößen, wie die geschätzte Geschwindigkeit und die geschätzte zurückgelegte Strecke, umfasst, abgeschätzt. Anschließend wird dieser geschätzte Bewegungszustand basierend auf den zusätzlich vorhandenen Beschleunigungswerten des Beschleunigungssensors korrigiert, insbesondere basierend auf einem Vergleich der geschätzten Beschleunigungswerte mit den tatsächlichen Beschleunigungswerten. Insbesondere können hierbei die geschätzten Beschleunigungswerte direkt anhand der vorhandenen gemessenen Beschleunigungswerte korrigiert werden. Zugleich werden, vorzugsweise basierend auf diesem Korrekturschritt, die weiteren Bewegungsgrößen des Bewegungszustands korrigiert, insbesondere die geschätzte Geschwindigkeit und die geschätzte zurückgelegte Strecke. Daraus kann anschließend die momentane Geschwindigkeit und/oder die aktuell zurückgelegte Strecke des Zweirads ermittelt werden.

Das Verfahren zeichnet sich somit dadurch aus, dass mit vergleichsweise einfacher und kostengünstiger Sensorik besonders umfangreiche und präzise Sensordaten über die Bewegung des Fahrrads ermittelt werden können. Insbesondere kann dabei zur Erfassung von genauen und hochaufgelösten Geschwindigkeitswerten auch bei niedrigen Geschwindigkeiten eine einfache und kostengünstige Sensorik verwendet werden, was sich besonders vorteilhaft in der Anwendung an einem Fahrrad auswirkt.

Die Unteransprüche haben bevorzugte Weiterbildungen der Erfindung zum Inhalt.

Bevorzugt umfasst das Verfahren ferner den folgenden Schritt: zweites Korrigieren des Bewegungszustands basierend auf den mittels des Raddrehzahlsensors detektierten Messpulsen. Bevorzugt erfolgt das zweite Korrigieren jedes Mal, wenn ein mittels des Raddrehzahlsensors detektierter Messpuls vorliegt. Dadurch kann eine besonders hohe Genauigkeit der Ermittlung der Bewegungsgrößen erfolgen, da mittels der vom Raddrehzahlsensor detektierten Messpulse, immer wenn solche Messpulse vorliegen, besonders genaue Daten zur Verfügung stehen und zur Optimierung des geschätzten Bewegungszustands verwendet werden können.

Besonders bevorzugt wird das zweite Korrigieren basierend auf folgender Gleichung durchgeführt: $y2 = [x5, old + 2\pi r]$. Dabei ist y2 ein korrigierter Wert für eine mit dem Zweirad zurückgelegte Strecke, x5,old ein alter, das heißt zeitlich zurückliegender, Wert für die mit dem Zweirad zurückgelegte Strecke, und r ein Radius eines Rads des Zweirads. Insbesondere ist y2 dabei die geschätzte zurückgelegte Strecke des Bewegungszustandes. Mit anderen Worten wird zu jedem Zeitpunkt, zu welchem ein Messpuls mittels des Raddrehzahlsensors detektiert wird, die geschätzte zurückgelegte Strecke des Bewegungszustands durch den genauen Messwert des Raddrehzahlsensors ersetzt.

Vorzugsweise werden basierend auf dem korrigierten Bewegungszustand eine oder mehrere der folgenden Bewegungsgrößen des Zweirads ermittelt: Rollwinkel, Nickwinkel, und Längsbeschleunigung. Dadurch kann besonders genau Aufschluss über die aktuelle Fortbewegung des Zweirads gewonnen werden.

Weiter bevorzugt wird das erste Korrigieren mittels eines nichtlinearen Kalman-Filters durchgeführt. Dadurch kann auf einfache Weise eine besonders effiziente und präzise Korrektur des Bewegungszustands durchgeführt werden.

Vorzugsweise wird das Abschätzen des Bewegungszustands des Zweirads mittels eines Zustandsvektors

$$\boldsymbol{x} = \begin{bmatrix} x1 \\ x2 \\ x3 \\ x4 \\ x5 \end{bmatrix}, \text{ mittels eines Eingangsvektors } \boldsymbol{u} = \begin{bmatrix} u1 \\ u2 \\ u3 \end{bmatrix}, \text{ und basierend auf folgender Systemgleichung durchgeführt:}$$

$$\dot{x} = \begin{bmatrix} u1 + \tan(x2)\sin(x1)\,u2 + \tan(x2)\cos(x1)\,u3 \\ \cos(x1)\,u2 - \sin(x1)u3 \\ 0 \\ x3 \\ x4 \end{bmatrix}.$$

Insbesondere kann der Eingangsvektor u dabei als Eingang der Systemgleichung $\dot{x}$ angesehen werden. Dabei sind: x1 ein Rollwinkel, x2 ein Nickwinkel, x3 eine Längsbeschleunigung, x4 eine Längsgeschwindigkeit, und x5 eine zurückgelegte Strecke. Weiterhin sind u1, u2, und u3 die dreidimensionalen Drehraten. Insbesondere entspricht dabei die Systemgleichung $\dot{x}$ einer zeitlichen Änderung des Bewegungszustands.

Bevorzugt erfolgt das Abschätzen des Bewegungszustands des Zweirads basierend auf einer Berechnung eines Integrals der Systemgleichung $\dot{x}$. Insbesondere können dabei nach der Integration der Systemgleichung direkt die entsprechend gewonnenen Bestandteile des Bewegungszustands als abgeschätzte Werte für die Beschleunigungswerte, die Geschwindigkeit, und die zurückgelegte Strecke verwendet werden.

Weiter bevorzugt wird das Abschätzen des Bewegungszustands des Zweirads ferner basierend auf den folgenden Gleichungen durchgeführt:

$$\boldsymbol{Rx} = \begin{bmatrix} 1 & 0 & 0 \\ 0 & \cos(x1) & \sin(x1) \end{bmatrix},$$

$$Ry = \begin{bmatrix} \cos(x2) & 0 & -\sin(x2) \\ 0 & 1 & 0 \\ \sin(x2) & 0 & \cos(x2) \end{bmatrix},$$

$$\dot{\psi} = \frac{(u2\ \sin(x1) + u3\ \cos(x1))}{\cos(x2)},$$

$$y1 = Rx\ Ry \begin{bmatrix} x3 \\ -x4\ \dot{\psi} \\ g \end{bmatrix}.$$

Dabei ist $\dot{\psi}$ eine Gierrate des Zweirads, und y1 sind die geschätzten Beschleunigungswerten y1 des Zweirads. Als Gierrate wird insbesondere eine Drehgeschwindigkeit des Zweirads um die Längsachse angesehen. Insbesondere erfolgt dabei das erste Korrigieren dadurch, dass die geschätzten Beschleunigungswerte y1 korrigiert werden.

Vorzugsweise umfasst das Verfahren ferner den Schritt: Ermitteln eines Stillstands des Zweirads basierend auf dem abgeschätzten Bewegungszustand. Bevorzugt kann dabei zusätzlich zwischen insgesamt drei Fahrmodi unterschieden werden: Stillstand, Fahren, und Transition. Vorzugsweise können die Fahrmodi anhand vordefinierter Schwellwerte, beispielsweise der geschätzten Geschwindigkeit, ermittelt werden. Dadurch kann besonders einfach und eindeutig Aufschluss über einen aktuellen Fahrzustand des Zweirads gewonnen werden. Zudem können die ermittelten Fahrzustände, wie der Stillstand, genutzt werden, um weitere Optimierungen des Verfahrens zur Erhöhung der Genauigkeit des Ermittelns des Bewegungszustands durchführen zu können.

Weiter bevorzugt umfasst das Verfahren ferner die Schritte:

- Reduzieren des Zustandsvektors x und der Systemgleichung x auf die folgenden Zustände: $x = \begin{bmatrix} x1 \\ x2 \end{bmatrix}$ und

$$\dot{x} = \begin{bmatrix} u1 + \tan(x2)\sin(x1)\ u2 + \tan(x2)\cos(x1)\ u3 \\ \cos(x1)\ u2 - \sin(x1)u3 \end{bmatrix},$$

wenn von dem Raddrehzahlsensor über mindestens einen vordefinierten Zeitraum keine Messpulse detektiert werden oder wenn ein Stillstand des Fahrzeugs ermittelt wurde, und

- Erweitern des Zustandsvektors x und der Systemgleichung $\dot{x}$ auf die ursprünglichen Zustände vor dem Reduzieren, wenn von dem Raddrehzahlsensor erneut Messpulse detektiert werden.

Das heißt, bei einem Stillstand, oder wenn der Raddrehzahlsensor aus einem anderen Grund keine Messpulse detektiert, werden der Zustandsvektor x und die Systemgleichung $\dot{x}$ auf die jeweiligen ersten beiden Zustände reduziert. Dadurch kann ein Abdriften der geschätzten Werte des Bewegungszustands, was auftreten kann, wenn aufgrund eines nicht vorliegenden Geschwindigkeitssignals keine Korrektur möglich ist, vermieden werden.

Besonders bevorzugt umfasst das Verfahren ferner den Schritt: Ermitteln eines Lenkwinkels des Zweirads basierend auf dem korrigierten Bewegungszustand. Als Lenkwinkel wird dabei ein Winkel zwischen einer Längsrichtung des Zweirads und einem Vorderrad des Zweirads projiziert auf eine Ebene senkrecht zur Hochachse, also beispielsweise auf eine Untergrundebene, angesehen. Der Lenkwinkel kann dabei durch die zeitlich hochaufgelöste und präzise Erfassung des Bewegungszustands besonders präzise ermittelt werden.

$$\delta = \arctan\left(\frac{\dot{\psi}\ L}{x4}\right),$$

Bevorzugt erfolgt das Ermitteln des Lenkwinkels $\delta$ basierend auf folgender Gleichung: mit der Gierrate $\dot{\psi}$, einem Radstand L des Zweirads, und der einer Längsgeschwindigkeit x4. Insbesondere entspricht der Radstand einem Abstand zwischen den beiden Radnaben bzw. Achsen des Zweirads. Bevorzugt ist dabei zusätzlich vorgesehen, die Berechnung dieser Gleichung derart durchzuführen, dass der Ausdruck im Nenner keine Werte um Null annimmt, um dadurch auftretende numerische Probleme zu vermeiden. Vorzugsweise wird hierfür eine ermittelte Minimalgeschwindigkeit als Längsgeschwindigkeit x4 verwendet. Bevorzugt wird die Berechnung des Lenkwinkels nur während einer erkannten Fahrt des Zweirads durchgeführt, und insbesondere bei einem erkannten Stillstand des Zweirads verhindert.

Weiterhin führt die Erfindung zu einem Zweirad, umfassend ein Sensorsystem, welches einen Drehratensensor, einen Beschleunigungssensor, und einen Raddrehzahlsensor aufweist. Zudem umfasst das Zweirad eine Steuervorrichtung, welche eingerichtet ist zur Durchführung des beschriebenen Verfahrens zum Ermitteln von Bewegungsgrößen des Zweirads. Vorzugsweise ist der Raddrehzahlsensor ein einpulsiger Reed-Sensor, welcher genau einen Magneten, der am Rad befestigt ist und mit dem Rad rotiert, aufweist. Das Zweirad zeichnet sich dabei dadurch aus, dass die Bewegungsgrößen mit hoher zeitlicher Auflösung und hoher Genauigkeit bei besonders einfachem um kostengünstigen Aufbau des Sensorsystems ermittelt werden können.

Bevorzugt ist das Zweirad als ein elektrisch angetriebenes, insbesondere und/oder antreibbares, Fahrrad ausgebildet, welches insbesondere auch als Elektrofahrrad bezeichnet werden können.

Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:

Figur 1     eine vereinfachte schematische Ansicht eines Zweirads mit einem Sensorsystem und einer Steuervorrichtung zur Durchführung eines Verfahrens gemäß einem bevorzugten Ausführungsbeispiel der Erfindung,

Figur 2     eine alternative Ansicht des Zweirads der Figur 1 zur Verdeutlichung eines Lenkwinkels,

Figur 3     eine alternative Ansicht des Zweirads der Figur 1 zur Verdeutlichung einer Schräglage, und

Figur 4     eine vereinfachte schematische Ansicht einer Durchführung des Verfahrens gemäß dem bevorzugten Ausführungsbeispiel der Erfindung.

Bevorzugte Ausführungsformen der Erfindung

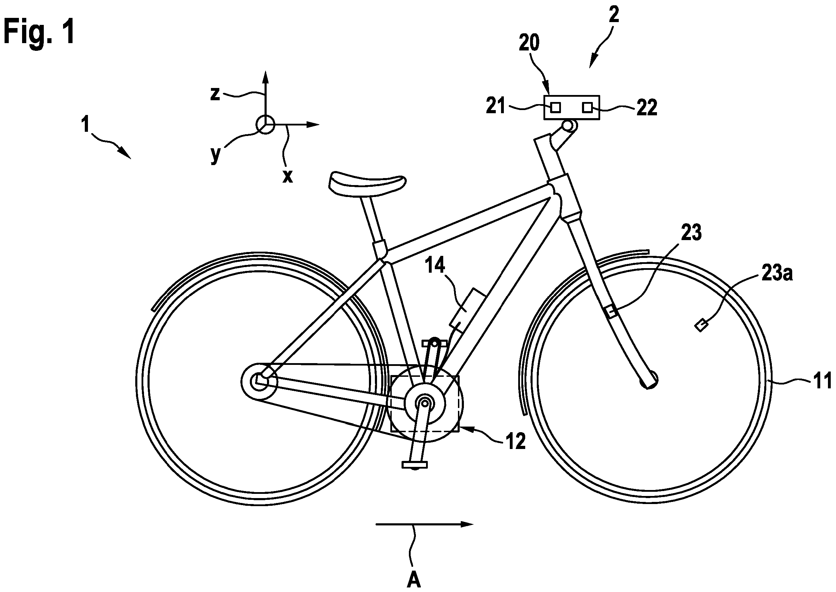

Figur 1 zeigt eine vereinfachte schematische Ansicht eines Zweirads 1 mit einem Sensorsystem 2 und einer Steuervorrichtung 20 zur Durchführung eines Verfahrens zum Ermitteln von Bewegungsgrößen des Zweirads 1 gemäß einem bevorzugten Ausführungsbeispiel der Erfindung.

Bei dem Zweirad 1 handelt es sich um ein Elektrofahrrad, welches im Bereich eines Tretlagers eine Antriebseinheit 12 aufweist, mittels welcher eine manuell erzeugte Tretkraft eines Fahrers des Zweirads 1 motorisch unterstützt werden kann. Die Antriebseinheit 12 wird dabei von einem elektrischen Energiespeicher 14 mit elektrischer Energie versorgt.

Die Steuervorrichtung 20 ist an einem Lenker des Zweirads 1 angeordnet und kann beispielsweise Teil eines Bordcomputers sein.

Das Sensorsystem 2 umfasst mehrere Sensoren. Im Detail umfasst das Sensorsystem 2 einen Drehratensensor 21 und einen Beschleunigungssensor 22, welche beide in die Steuervorrichtung 20 integriert sind.

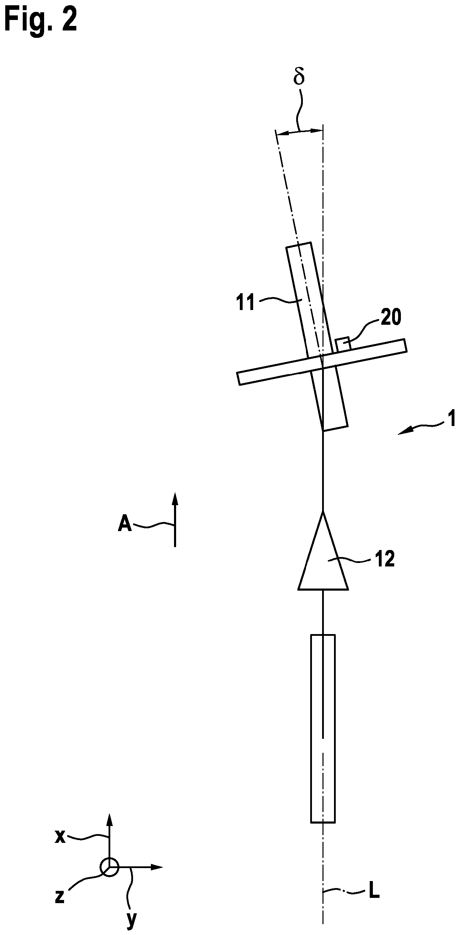

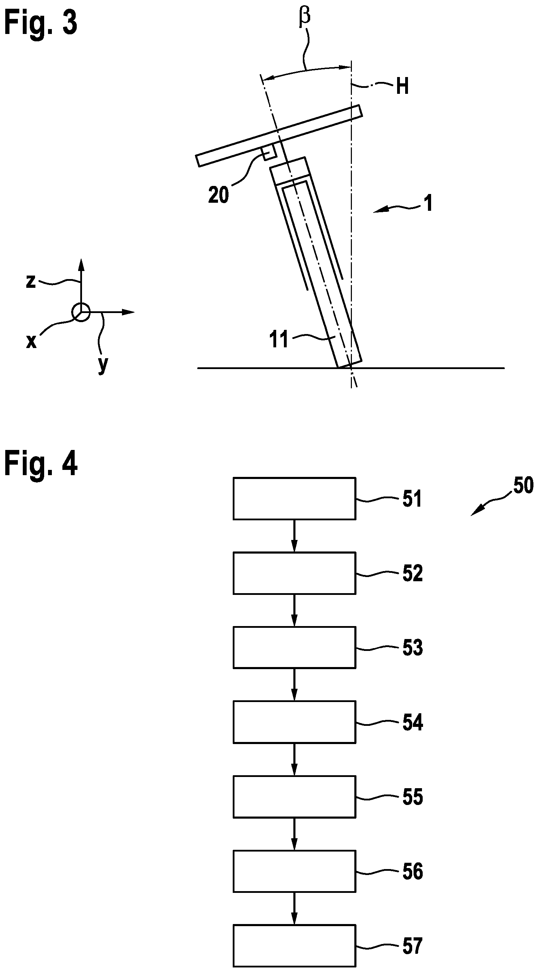

Mittels des Drehratensensors 21 werden dreidimensionale Drehraten des Zweirads 1 während einer Fahrt erfasst. Dabei werden jeweils eine Drehrate um die in der Figur 1 angedeuteten Achsen x, y, z (vergleiche auch Figuren 2 und 3) erfasst.

Die x-Achse ist dabei parallel zu einer Längsachse L des Zweirads 1 (siehe Figur 2), welche bei Geradeausfahrt des Zweirads 1 parallel zu einer Fahrtrichtung A ist. Die z-Achse entspricht einer vertikalen Hochachse H (siehe Figur 3), welche insbesondere parallel zu einer (nicht dargestellten) Gravitationsrichtung eines Erdschwerefelds ist. Die y-Achse ist senkrecht zur x-Achse und senkrecht zur z-Achse. Die y-Achse kann auch als Nickachse bezeichnet werden. Weiterhin kann die z-Achse auch als Gierachse bezeichnet werden.

Mittels des Beschleunigungssensors 22 werden Beschleunigungswerte des Zweirads 1 erfasst, vorzugsweise insgesamt drei Beschleunigungswerte jeweils entlang jeder der Achsen x, y, z.

Ferner umfasst das Sensorsystem 2 einen einpulsigen Raddrehzahlsensor 23, welcher als Umdrehungssensor ausgebildet ist, um pro Umdrehung eines Rads 11 des Zweirads 1 genau einen Messpuls zu detektieren. Hierfür ist der Raddrehzahlsensor 23 eingerichtet, um bei jedem Passieren eines Magnets 23a, welcher beispielsweise an einer Speiche des Rads 11 befestigt ist, pro Umdrehung des Rads 11 genau einmal den Messpuls zu detektieren. Basierend auf den mittels des Raddrehzahlsensors 23 detektierten Messpulsen kann somit eine Drehzahl des Rads 11 ermittelt werden.

Als Bewegungsgrößen des Zweirads 1 werden dabei mittels des Verfahrens 50 eine momentane Geschwindigkeit des Zweirads 1, eine zurückgelegte Strecke, und ein momentaner Lenkwinkel $\delta$ ermittelt.

Der Lenkwinkel $\delta$ ist in der Figur 2 verdeutlicht. Figur 2 zeigt dabei eine Ansicht des Zweirads 1 entlang der z-Achse. Wie in der Figur 2 zu erkennen, entspricht der Lenkwinkel $\delta$ einem Winkel zwischen der Längsachse L und dem Vorderrad 11. Bei Geradeausfahrt ist der Lenkwinkel $\delta$ gleich Null, und entsprechend höher, je kleiner ein Kurvenradius der Kurve, welche von dem Zweirad 1 durchfahren wird.

Bei einer Kurvenfahrt mit dem Zweirad 1 wird das Zweirad 1 wie in der Figur 3 dargestellt, in eine Schräglage gebracht. Figur 3 zeigt dabei schematisch einen Neigungswinkel β des Zweirads 1. Der Neigungswinkel β ist hierbei der Winkel, um welchen das Zweirad 1 aus der Hochachse H geneigt ist.

Die Durchführung des Verfahrens 50 zum Ermitteln der Bewegungsgrößen des Zweirads 1 wird nachfolgend in Bezug auf die Figur 4 beschrieben.

Bei dem Verfahren 50 erfolgt zunächst ein Erfassen 51 der dreidimensionalen Drehraten des Zweirads 1 mittels des Drehratensensors 21. Gleichzeitig erfolgt ein Erfassen 52 der Beschleunigungswerte des Zweirads 1 mittels des Beschleunigungssensors 22. Basierend auf den erfassten dreidimensionalen Drehraten erfolgt anschließend ein Abschätzen 53 eines Bewegungszustands des Zweirads 1.

Der Bewegungszustand des Zweirads 1 umfasst dabei Schätzwerte für geschätzte Beschleunigungswerte und für eine geschätzte Geschwindigkeit und außerdem für eine geschätzte zurückgelegte Strecke. Im Detail erfolgt das Abschätzen des Bewegungszustands mittels eines Zustandsvektors, welcher die folgenden Parameter aufweist: Rollwinkel, Nickwinkel, Längsbeschleunigung, Längsgeschwindigkeit, und zurückgelegte Strecke. Insbesondere entspricht der Rollwinkel dabei dem Neigungswinkel β, also einer Auslenkung bzw. einer Drehung des Zweirads 1 um die Längsachse H. Vorzugsweise entspricht der Nickwinkels einer Auslenkung bzw. Drehung des Zweirads 1 um die Y-Achse, also quer zur Längsachse H.

Basierend auf dem Zustandsvektor und einem Eingangsvektor, wobei der Eingangsvektor die dreidimensionalen Drehraten aufweist, wird nachfolgend eine Systemgleichung erstellt, welche insbesondere eine zeitliche Änderung des Zustandsvektors darstellt.

Anschließend erfolgt das Abschätzen 53 des Bewegungszustands des Zweirads 1 durch Berechnung eines Integrals dieser Systemgleichung. Dadurch liegen die geschätzten Bewegungsgrößen des Zweirads 1 vor.

Anschließend erfolgen Korrekturschritte 54, 55 des Bewegungszustands. Zunächst erfolgt ein erstes Korrigieren 54 des Bewegungszustands basierend auf den mittels des Beschleunigungssensors 22 tatsächlich erfassten Beschleunigungswerten.

Zusätzlich erfolgt ein zweites Korrigieren 55 des Bewegungszustands jedes Mal, wenn ein Messpuls des Raddrehzahlsensors 23 detektiert wird. Im Detail wird hierbei der Bewegungszustand basierend auf der mittels des Raddrehzahlsensors 23 ermittelten tatsächlich zurückgelegte Strecke korrigiert. Da aufgrund des geometrischen Zusammenhangs der Messpulse über den Radumfang des Rads 11 die tatsächlich zurückgelegte Strecke sehr genau bestimmt werden kann, kann mittels des zweiten Korrigierens 55 ein besonders genauer Korrekturschritt des Bewegungszustands durchgeführt werden.

Anschließend kann basierend auf dem korrigierten Bewegungszustand das Ermitteln 57 des Lenkwinkels $\delta$ des Zweirads 1 erfolgen.

Das Verfahren 50 kann außerdem in einer (nicht dargestellten) Abwandlung durchgeführt werden, welche zusätzlich einen Stillstand des Zweirads 1 berücksichtigt. Dabei erfolgt zusätzlich ein Ermitteln eines Stillstands des Zweirads 1 basierend auf dem abgeschätzten Bewegungszustand.

Wenn ein Stillstand des Zweirads 1 ermittelt wurde, können der Zustandsvektor und die Systemgleichung auf die ersten beiden Zustände reduziert werden. Dadurch kann vermieden werden, dass die geschätzten Bewegungsgrößen durch Nichtvorhandensein eines Messpulses, welcher zum zweiten Korrigieren 55 verwendet werden kann, mit fortschreitender Zeit abdriften. Sobald ermittelt wurde, dass sich das Zweirad 1 wieder fortbewegt, oder sobald wieder ein Messpuls mittels des Raddrehzahlsensors 23 ermittelt wurde, werden der Zustandsvektor und die Systemgleichung wieder auf die ursprünglichen Zustände vor dem Reduzieren erweitert, sodass anschließend wieder eine genaue Bestimmung sämtlicher Bewegungsgrößen ermöglicht wird.

Alternativ zu einem Stillstand des Zweirads 1 kann auch ein Nicht-Vorhandensein eines Messpulses des Raddrehzahlsensors 23 zum Reduzieren des Zustandsvektors und der Zustandsgleichung auf die ersten beiden Zustände verwendet werden.

Der einfach oder zweifach korrigierte Bewegungszustand weist somit besonders genaue Schätzwerte für die Bewegungsgrößen des Zweirads 1 auf. Insbesondere kann dadurch anhand des korrigierten Bewegungszustands zu jedem beliebigen Zeitpunkt eine gewünschte Bewegungsgröße, wie beispielsweise die Geschwindigkeit, abgelesen und beispielsweise für weitere Systeme oder Verfahren des Zweirads 1 verwendet werden. Weiterhin können durch das Verfahren 50 die Bewegungsgrößen des Zweirads 1 auch bei sehr niedrigen Geschwindigkeit präzise ermittelt werden, da das Verfahren 50 insbesondere auf den Messwerten des Drehratensensors 21 und des Beschleunigungssensors 22 basiert, welche auch bei niedrigen Geschwindigkeiten präzise und zuverlässige Messwerte liefern können.

**Patentansprüche**

1. Verfahren zum Ermitteln von Bewegungsgrößen eines Zweirads (1),

    - wobei das Zweirad (1) ein Sensorsystem (2) umfasst, welches einen Drehratensensor (21), einen Beschleunigungssensor (22), und einen Raddrehzahlsensor (23) aufweist,
- wobei der Raddrehzahlsensor (23) ausgebildet ist, um pro Umdrehung eines Rads (11) des Zweirads (1) mindestens einen Messpuls zu detektieren, und
- wobei das Verfahren die Schritte umfasst:

- Erfassen (51) von, insbesondere dreidimensionalen, Drehraten des Zweirads (1) mittels des Drehratensensors (21),
- Erfassen (52) von Beschleunigungswerten des Zweirads (1) mittels des Beschleunigungssensors (22),

**gekennzeichnet durch**:

- Abschätzen (53) eines Bewegungszustands des Zweirads (1) basierend auf den erfassten Drehraten,
- wobei der Bewegungszustand Schätzwerte für geschätzte Beschleunigungswerte und für eine geschätzte Geschwindigkeit und für eine geschätzte zurückgelegte Strecke umfasst,
- erstes Korrigieren (54) des geschätzten Bewegungszustands basierend auf den erfassten Beschleunigungswerten, und
- Ermitteln (56) einer mit dem Zweirad (1) zurückgelegten Strecke, oder einer momentanen Geschwindigkeit des Zweirads (1) und einer mit dem Zweirad (1) zurückgelegten Strecke basierend auf dem korrigierten geschätzten Bewegungszustand.

2. Verfahren nach Anspruch 1, ferner umfassend den Schritt:

- zweites Korrigieren (55) des geschätzten Bewegungszustands basierend auf den mittels des Raddrehzahlsensors (23) detektierten Messpulsen.

3. Verfahren nach Anspruch 2, wobei das zweite Korrigieren (55) basierend auf folgender Gleichung durchgeführt wird:

$$y2 = [x5, old + 2\,\pi\,r]$$

mit einem korrigierten Wert für eine mit dem Zweirad (1) zurückgelegte Strecke y2, einem alten Wert für eine mit dem Zweirad (1) zurückgelegte Strecke x5,old , und einem Radius r eines Rads (11) des Zweirads (1).

4. Verfahren nach einem der vorhergehenden Ansprüche, wobei basierend auf dem korrigierten geschätzten Bewegungszustand eine oder mehrere der folgenden Bewegungsgrößen des Zweirads (1) ermittelt werden: Rollwinkel, Nickwinkel, und Längsbeschleunigung.

5. Verfahren nach einem der vorhergehenden Ansprüche, wobei das erste Korrigieren (54) mittels eines nichtlinearen Kalman-Filters durchgeführt wird.

6. Verfahren nach einem der vorhergehenden Ansprüche, wobei das Abschätzen (53) des Bewegungszustands des

$$x = \begin{bmatrix} x1 \\ x2 \\ x3 \\ x4 \\ x5 \end{bmatrix}$$

Zweirads (1) mittels eines Zustandsvektors ⎡x1 x2 x3 x4 x5⎤, mit einem Rollwinkel x1, einem Nickwinkel x2, einer Längsbeschleunigung x3, einer Längsgeschwindigkeit x4, und einer zurückgelegten Strecke x5, und mittels eines

$$u = \begin{bmatrix} u1 \\ u2 \\ u3 \end{bmatrix}$$

Eingangsvektors ⎡u1 u2 u3⎤, mit den dreidimensionalen Drehraten u1, u2, und u3, und basierend auf folgender Systemgleichung erfolgt:

$$\dot{x} = \begin{bmatrix} u1 + \tan(x2)\sin(x1)\ u2 + \tan(x2)\cos(x1)\ u3 \\ \cos(x1)\ u2 - \sin(x1)u3 \\ 0 \\ x3 \\ x4 \end{bmatrix}.$$

**7.** Verfahren nach Anspruch 6, wobei das Abschätzen (53) des Bewegungszustands des Zweirads (1) basierend auf einer Berechnung eines Integrals der Systemgleichung $\dot{x}$ erfolgt.

**8.** Verfahren nach Anspruch 7, wobei das Abschätzen (53) des Bewegungszustands des Zweirads (1) ferner basierend auf den folgenden Gleichungen durchgeführt wird:

$$\boldsymbol{Rx} = \begin{bmatrix} 1 & 0 & 0 \\ 0 & \cos(x1) & \sin(x1) \end{bmatrix},$$

$$\boldsymbol{Ry} = \begin{bmatrix} \cos(x2) & 0 & -\sin(x2) \\ 0 & 1 & 0 \\ \sin(x2) & 0 & \cos(x2) \end{bmatrix},$$

$$\dot{\psi} = \frac{(u2\ \sin(x1) + u3\ \cos(x1))}{\cos(x2)},$$

$$\boldsymbol{y1} = \boldsymbol{Rx}\,\boldsymbol{Ry} \begin{bmatrix} x3 \\ -x4\,\dot{\psi} \\ g \end{bmatrix},$$

mit einer Gierrate $\dot{\psi}$ des Zweirads (1), und den geschätzten Beschleunigungswerten y1 des Zweirads (1).

**9.** Verfahren nach einem der Ansprüche 6 bis 8, ferner umfassend die Schritte:

- Reduzieren des Zustandsvektors $x$ und der Systemgleichung $\dot{x}$ auf die folgenden Zustände: $x = \begin{bmatrix} x1 \\ x2 \end{bmatrix}$ und

$$\dot{x} = \begin{bmatrix} u1 + \tan(x2)\sin(x1)\ u2 + \tan(x2)\cos(x1)\ u3 \\ \cos(x1)\ u2 - \sin(x1)u3 \end{bmatrix},$$

wenn von dem Raddrehzahlsensor (23) über einen vorbestimmten Zeitraum keine Messpulse detektiert werden oder wenn ein Stillstand des Fahrzeugs ermittelt wurde, und
- Erweitern des Zustandsvektors x und der Systemgleichung $\dot{x}$ auf die ursprünglichen Zustände vor dem Reduzieren, wenn von dem Raddrehzahlsensor (23) erneut Messpulse detektiert werden.

**10.** Verfahren nach einem der vorhergehenden Ansprüche, ferner umfassend den Schritt:

- Ermitteln eines Stillstands des Zweirads (1) basierend auf dem geschätzten Bewegungszustand.

**11.** Verfahren nach einem der vorhergehenden Ansprüche, ferner umfassend den Schritt:

- Ermitteln (57) eines Lenkwinkels des Zweirads (1) basierend auf dem korrigierten geschätzten Bewegungszustand.

**12.** Verfahren nach Anspruch 6 bis 8 und 11, wobei das Ermitteln (57) des Lenkwinkels $\delta$ basierend auf folgender

Gleichung durchgeführt wird: $\delta$ = arctan $\left(\dfrac{\dot{\psi}\,L}{x4}\right)$ , mit einem Radstand L des Zweirads (1).

**13.** Zweirad, umfassend:

- ein Sensorsystem (2), welches einen Drehratensensor (21), einen Beschleunigungssensor (22), und einen Raddrehzahlsensor (23) aufweist, und
- eine Steuervorrichtung (20), welche eingerichtet ist zur Durchführung eines Verfahrens nach einem der vorhergehenden Ansprüche.

**14.** Zweirad nach Anspruch 13, **dadurch gekennzeichnet, dass** das Zweirad als ein elektrisch angetriebenes Fahrrad ausgebildet ist.

## Claims

**1.** Method for ascertaining movement variables of a two-wheeled vehicle (1),

- wherein the two-wheeled vehicle (1) comprises a sensor system (2) having a rotation rate sensor (21), an acceleration sensor (22), and a wheel speed sensor (23),
- wherein the wheel speed sensor (23) is designed to detect at least one measurement pulse per revolution of a wheel (11) of the two-wheeled vehicle (1), and
- wherein the method comprises the following steps:

- detecting (51) rotation rates, in particular three-dimensional rotation rates, of the two-wheeled vehicle (1) by means of the rotation rate sensor (21),
- detecting (52) acceleration values of the two-wheeled vehicle (1) by means of the acceleration sensor (22),

**characterized by**:

- estimating (53) a motion state of the two-wheeled vehicle (1) on the basis of the detected rotation rates,
- wherein the motion state comprises estimated values for estimated acceleration values and for an estimated speed and for an estimated distance covered,
- first correcting (54) of the estimated motion state on the basis of the detected acceleration values, and
- ascertaining (56) a distance covered by the two-wheeled vehicle (1) or an instantaneous speed of the two-wheeled vehicle (1) and a distance covered by the two-wheeled vehicle (1) on the basis of the corrected estimated motion state.

**2.** Method according to Claim 1, further comprising the following step:

- second correcting (55) of the estimated motion state on the basis of the measurement pulses detected by means of the wheel speed sensor (23).

**3.** Method according to Claim 2, wherein the second correcting (55) is carried out on the basis of the following equation:

$$\boldsymbol{y2} = [x5, old + 2\,\pi\,r]$$

with a corrected value for a distance y2 covered by the two-wheeled vehicle (1),

an old value for a distance x5,old covered by the two-wheeled vehicle (1),
and a radius r of a wheel (11) of the two-wheeled vehicle (1).

**4.** Method according to any of the preceding claims, wherein one or more of the following motion variables of the two-wheeled vehicle (1) are ascertained on the basis of the corrected estimated motion state: roll angle, pitch angle and longitudinal acceleration.

**5.** Method according to any of the preceding claims, wherein the first correcting (54) is carried out by means of a non-linear Kalman filter.

6. Method according to any of the preceding claims, wherein estimating (53) the motion state of the two-wheeled vehicle

$$x = \begin{bmatrix} x1 \\ x2 \\ x3 \\ x4 \\ x5 \end{bmatrix}$$

(1) is effected by means of a state vector, with a roll angle x1, a pitch angle x2, a longitudinal acceleration

$$u = \begin{bmatrix} u1 \\ u2 \\ u3 \end{bmatrix}$$

x3, a longitudinal speed x4, and a distance covered x5, and using an input vector, with the three-dimensional rotational rates u1, u2, and u3, and based on the following system equation:

$$\dot{x} = \begin{bmatrix} u1 + \tan(x2)\sin(x1)\,u2 + \tan(x2)\cos(x1)\,u3 \\ \cos(x1)\,u2 - \sin(x1)u3 \\ 0 \\ x3 \\ x4 \end{bmatrix}.$$

7. Method according to Claim 6, wherein estimating (53) the motion state of the two-wheeled vehicle (1) is effected on the basis of a calculation of an integral of the system equation $\dot{x}$.

8. Method according to Claim 7, wherein estimating (53) the motion state of the two-wheeled vehicle (1) is furthermore carried out on the basis of the following equations:

$$Rx = \begin{bmatrix} 1 & 0 & 0 \\ 0 & \cos(x1) & \sin(x1) \end{bmatrix},$$

$$Ry = \begin{bmatrix} \cos(x2) & 0 & -\sin(x2) \\ 0 & 1 & 0 \\ \sin(x2) & 0 & \cos(x2) \end{bmatrix},$$

$$\dot{\psi} = \frac{(u2\,\sin(x1) + u3\,\cos(x1))}{\cos(x2)},$$

$$y1 = Rx\,Ry \begin{bmatrix} x3 \\ -x4\,\dot{\psi} \\ g \end{bmatrix},$$

with a yaw rate $\dot{\psi}$ of the two-wheeled vehicle (1), and the estimated acceleration values y1 of the two-wheeled vehicle (1).

9. Method according to any of Claims 6 to 8, furthermore comprising the following steps:

- reducing the state vector x and the system equation $\dot{x}$ to the following states:

$$x = \begin{bmatrix} x1 \\ x2 \end{bmatrix}$$

and

$$\dot{x} = \begin{bmatrix} u1 + \tan(x2)\sin(x1)\ u2 + \tan(x2)\cos(x1)\ u3 \\ \cos(x1)\ u2 - \sin(x1)u3 \end{bmatrix},$$

if the wheel speed sensor (23) detects no measurement pulses over a predetermined period of time, or if a standstill of the vehicle has been ascertained,

and

- expanding the state vector x and the system equation x to the original states before the reduction if measurement pulses are again detected by the wheel speed sensor (23).

10. Method according to any of the preceding claims, furthermore comprising the following step:

- ascertaining a standstill of the two-wheeled vehicle (1) on the basis of the estimated motion state.

11. Method according to any of the preceding claims, furthermore comprising the following step:

- ascertaining (57) a steering angle of the two-wheeled vehicle (1) on the basis of the corrected estimated motion state.

12. Method according to Claims 6 to 8 and 11, wherein the ascertaining (57) of the steering angle $\delta$ is carried out on the basis of the following equation: $\delta = \arctan\left(\dfrac{\dot{\psi}\,L}{x4}\right)$, with a wheelbase L of the two-wheeled vehicle (1).

13. Two-wheeled vehicle, comprising:

- a sensor system (2) having a rotation rate sensor (21), an acceleration sensor (22), and a wheel speed sensor (23), and
- a control device (20) configured to carry out a method according to any of the preceding claims.

14. Two-wheeled vehicle according to Claim 13, **characterized in that** the two-wheeled vehicle is in the form of an electrically driven bicycle.

**Revendications**

1. Procédé pour déterminer des quantités de mouvement d'un deux-roues (1),

- le deux-roues (1) comprenant un système de capteurs (2) qui comporte un capteur de vitesse de rotation (21), un capteur d'accélération (22) et un capteur (23) de vitesse de roue,
- le capteur (23) de vitesse de rotation de roue étant conçu de façon à détecter au moins une impulsion de mesure par tour d'une roue (11) du deux-roues (1), et
- le procédé comprenant les étapes suivantes :

  - détection (51) des vitesses de rotation, en particulier tridimensionnelles, du deux-roues (1) au moyen du capteur de vitesse de rotation (21),
  - détection (52) des valeurs d'accélération du deux-roues (1) au moyen du capteur d'accélération (22),

**caractérisé par** :

  - le fait (53) d'estimer un état de mouvement du deux-roues (1) sur la base des vitesses de rotation détectées,
  - l'état de mouvement comprenant des valeurs estimées pour des valeurs d'accélération estimées et pour une vitesse estimée et pour une distance estimée parcourue,
  - une première correction (54) de l'état de mouvement estimé sur la base des valeurs d'accélération détectées, et
  - déterminer (56) une distance parcourue par le deux-roues (1) ou une vitesse instantanée du deux-roues (1) et une distance parcourue par le deux-roues (1) sur la base de l'état de mouvement estimé corrigé.

2. Procédé selon la revendication 1, comprenant en outre l'étape suivante :

- effectuer une deuxième correction (55) de l'état de mouvement estimé sur la base des impulsions de mesure détectées au moyen du capteur (23) de vitesse de roue.

3. Procédé selon la revendication 2, dans lequel la deuxième correction (55) est effectuée sur la base de l'équation suivante :

$$\boldsymbol{y2} = [x5, old + 2\,\pi\,r]$$

avec une valeur corrigée pour une distance y2 parcourue par le deux-roues (1), une ancienne valeur pour une distance parcourue x5,old par le deux-roues (1), et un rayon r d'une roue (11) du deux-roues (1).

4. Procédé selon l'une des revendications précédentes, dans lequel, sur la base de l'état de mouvement estimé corrigé, une ou plusieurs des quantités de mouvement suivantes du deux-roues (1) sont déterminées : angle de roulis, angle de tangage et accélération longitudinale.

5. Procédé selon l'une des revendications précédentes, dans lequel la première correction (54) est effectuée au moyen d'un filtre de Kalman non linéaire.

6. Procédé selon l'une des revendications précédentes, dans lequel l'estimation (53) de l'état de mouvement du deux-roues (1) est effectuée au moyen d'un vecteur d'état $x = \begin{bmatrix} x1 \\ x2 \\ x3 \\ x4 \\ x5 \end{bmatrix}$, avec un angle de roulis x1, un angle de tangage x2, une accélération longitudinale x3, une vitesse longitudinale x4 et une distance parcourue x5, et au moyen d'un vecteur d'entrée $u = \begin{bmatrix} u1 \\ u2 \\ u3 \end{bmatrix}$, avec les vitesses de rotation tridimensionnelles u1, u2 et u3, et sur la base de l'équation système suivante :

$$\dot{x} = \begin{bmatrix} u1 + \tan(x2)\sin(x1)\,u2 + \tan(x2)\cos(x1)\,u3 \\ \cos(x1)\,u2 - \sin(x1)u3 \\ 0 \\ x3 \\ x4 \end{bmatrix}.$$

7. Procédé selon la revendication 6, dans lequel l'estimation (53) de l'état de mouvement du deux-roues (1) est effectuée sur la base d'un calcul d'une intégrale de l'équation système $\dot{x}$.

8. Procédé selon la revendication 7, dans lequel l'estimation (53) de l'état de mouvement du deux-roues (1) est en outre effectuée sur la base des équations suivantes :

$$Rx = \begin{bmatrix} 1 & 0 & 0 \\ 0 & \cos(x1) & \sin(x1) \end{bmatrix},$$

$$Ry = \begin{bmatrix} \cos(x2) & 0 & -\sin(x2) \\ 0 & 1 & 0 \\ \sin(x2) & 0 & \cos(x2) \end{bmatrix},$$

$$\dot{\psi} = \frac{(u2\,\sin(x1) + u3\,\cos(x1))}{\cos(x2)},$$

$$y1 = Rx\,Ry\begin{bmatrix} x3 \\ -x4\,\dot{\psi} \\ g \end{bmatrix},$$

avec une vitesse de lacet $\dot{\psi}$ du deux-roues (1), et les valeurs d'accélération estimées y1 du deux-roues (1).

9. Procédé selon l'une des revendications 6 à 8, comprenant en outre les étapes suivantes :

   - réduire le vecteur d'état x et l'équation du système x aux états suivants :

$$x = \begin{bmatrix} x1 \\ x2 \end{bmatrix}$$

et

$$\dot{x} = \begin{bmatrix} u1 + \tan(x2)\sin(x1)\,u2 + \tan(x2)\cos(x1)\,u3 \\ \cos(x1)\,u2 - \sin(x1)u3 \end{bmatrix},$$

si aucune impulsion de mesure n'est détectée par le capteur (23) de vitesse de roue pendant une période prédéterminée ou si un arrêt du véhicule a été détecté, et
   - élargir le vecteur d'état x et l'équation du système x aux états d'origine avant la réduction, si le capteur (23) de vitesse de roue détecte à nouveau des impulsions de mesure.

10. Procédé selon l'une des revendications précédentes, comprenant en outre l'étape suivante :

    - déterminer l'arrêt du deux-roues (1) sur la base de l'état de mouvement estimé.

11. Procédé selon l'une des revendications précédentes, comprenant en outre l'étape suivante :

    - déterminer (57) un angle de braquage du deux-roues (1) sur la base de l'état de mouvement estimé corrigé.

12. Procédé selon les revendications 6 à 8 et 11, dans lequel la détermination (57) de l'angle de braquage $\delta$ est effectuée

sur la base de l'équation suivante : $\delta = \arctan\left(\dfrac{\dot{\psi}\,L}{x4}\right)$, avec un empattement L du deux-roues (1).

13. Deux-roues, comprenant :

    - un système de capteurs (2) comprenant un capteur de vitesse de rotation (21), un capteur d'accélération (22) et un capteur (23) de vitesse de rotation de roue, et
    - un dispositif de commande (20) qui est conçu de façon à mettre en œuvre un procédé selon l'une des revendications précédentes.

14. Deux-roues selon la revendication 13, **caractérisé en ce que** le deux-roues est conçu sous la forme d'un vélo à propulsion électrique.

**Fig. 1**

EP 4 163 596 B1

# Fig. 2

$\delta$

11

20

1

A

12

x

z

y

L

**Fig. 3**

β

H

20

1

11

z

x

y

**Fig. 4**

50

51

52

53

54

55

56

57

**EP 4 163 596 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012259526 A1
- US 2017285065 A1
- US 2012323485 A